# EUROPÄISCHE PATENTANMELDUNG

(11) **EP 0 738 048 A2**
(43) Veröffentlichungstag der Anmeldung: **16.10.1996**
(21) Anmeldenummer: 96105678.5
(22) Anmeldetag: 11.04.1996
(51) Int. Cl.: H04B 1/40

(54) **Teilnehmereinrichtung sowie Verfahren zum Aufbau und Betrieb eines digitalen Kommunikationsnetzes**

(30) Priorität: 13.04.1995 DE 19513449
(71) Anmelder: Ballmann, Ralf, 91080 Marloffstein (DE)
(72) Erfinder: Ballmann, Ralf, 91080 Marloffstein (DE)
(74) Vertreter: Hafner, Dieter, Dr.rer.nat., Dipl.-Phys.

(57) **Zusammenfassung**

Die Erfindung betrifft eine Teilnehmereinrichtung sowie ein zugehöriges Verfahren zum Aufbau und Betrieb eines digitalen Kommunikationsnetzes mit mehreren gleichartigen Teilnehmereinrichtungen, mit einem E/A-Prozessor 1 zum Empfang, zur Wiedergabe und zur Verarbeitung eines Signals, mit einem Protokollprozessor 2, mit einem mit dem E/A-Prozessor 1 und dem Protokollprozessor 2 in Verbindung stehenden Signalverarbeitungsprozessor 3 zur Komprimierung/Dekomprimierung sowie Prüfung von Daten, mit einem mit dem Signalverarbeitungsprozessor 3 verbundenen Zeitscheibenprozessor 4 zur Herstellung bzw. Beendigung einer Verbindung mit anderen Teilnehmereinrichtungen, mit einer mit dem Zeitscheibenprozessor 4 verbundenen Übertragungseinrichtung 5 sowie mit einem mit dem E/A-Prozessor 1, dem Protokollprozessor 2, dem Signalverarbeitungsprozessor 3, dem Zeitscheibenprozessor 4 sowie der Übertragungseinrichtung 5 in Verbindung stehenden und diese steuernden Steuerungsprozessor 6.

## Beschreibung

Die Erfindung betrifft eine Teilnehmereinrichtung sowie ein zugehöriges Verfahren zum Aufbau und Betrieb eines digitalen Kommunikationsnetzes mit mehreren gleichartigen Teilnehmereinrichtungen.

Der Erfindung liegt die Aufgabe zugrunde, eine Teilnehmereinrichtung sowie zugehörige Verfahren und Verwendungsmöglichkeiten anzubieten, mit denen eine beliebig große Anzahl von Teilnehmern ohne Inanspruchnahme zentraler Vermittlungseinheiten Sende- bzw. Empfangsverbindungen herstellen können.

Die Aufgabe wird hinsichtlich der Teilnehmereinrichtung durch den kennzeichnenden Teil des Patentanspruchs 1 gelöst. Vorteilhafte Ausführungsformen der Teilnehmereinrichtung werden durch die Unteransprüche 2 -30 realisiert.

Im Hinblick auf das Verfahren wird die Aufgabe durch den kennzeichnenden Teil des Patentanspruchs 31 gelöst. Vorteilhafte Ausführungsformen des Verfahrens sind in den Unteransprüchen 32 und 33 verwirklicht.

Anspruch 34 stellt einen vorteilhaften Verwendungsanspruch dar.

Die erfindungsgemäße Teilnehmereinrichtung sowie das aus mehreren Teilnehmereinrichtungen gebildete digitale Kommunikationsnetz ermöglicht eine gleichzeitige Kommunikation mehrerer Teilnehmer sowie das gezielte Herstellen einer Verbindung von Punkt-zu-Punkt zwischen zwei oder mehreren Teilnehmern und das Ausblenden bestimmter Teilnehmer.

Jeder Teilnehmer sendet bzw. empfängt über seine Teilnehmereinrichtung ununterbrochen Botschaften und Datenblöcke. Die von anderen Teilnehmereinrichtungen ausgesendeten Botschaften werden in der mit der Teilnehmereinrichtung verbundenen Speichereinheit eines jeden Teilnehmers abgespeichert, so daß nach Durchlauf eines Übertragungszyklus, bei dem jeder aktive Teilnehmer genau einmal gesendet hat, die Speichereinheit jeder Teilnehmereinrichtung mit den jeweiligen von bestimmten anderen aktiven Teilnehmereinrichtungen gesendeten Botschaften bzw. Daten belegt ist.

Die mit jeder Teilnehmereinrichtung verbundene jeweilige individuelle Speichereinheit wird also während des Durchlaufs eines jeden Übertragungszyklus mit Daten zur Abspeicherung versorgt. Die Speicherbelegung innerhalb der Speichereinheit erfolgt nach einer den einzelnen Teilnehmer und Teilnehmereinrichtungen vorher zu gewiesenen Kennung.

Im Rahmen eines jeden Übertragungszyklus fragt nun die erfindungsgemäße Teilnehmereinrichtung sukzessive die nach der Kennung bekannten anderen Teilnehmereinrichtungen ab und empfängt gegebenenfalls in der Speichereinheit abzulegende Dateninformationen.

Innerhalb eines Übertragungszyklus hat desweiteren jede aktive Teilnehmereinrichtung mindestens einmal die Gelegenheit, Daten an die anderen Teilnehmereinrichtungen zu versenden. Außerdem ist innerhalb eines Übertragungszyklus noch die Möglichkeit gegeben, daß auch "unbekannte" Teilnehmer - die bisher keine Kennung besitzen - sich in das aus den bisherigen - mit bekannten Kennungen ausgestatteten - Teilnehmereinrichtungen bestehende Kommunikationsnetz einklinken können.

Jeder Übertragungszyklus enthält also Empfangsabschnitte, Sendeabschnitte der eigenen Teilnehmereinrichtung sowie einen Abschnitt, in dem eine Sendeaufforderung an eine bisher unbekannte Teilnehmereinrichtung aufgegeben wird.

Vorteilhafterweise wird im Rahmen eines jeden Übertragungszyklus max. eine neue, bisher unbekannte Teilnehmereinrichtung mit einer Kennung versehen und in den Kreis der aktiven Teilnehmer - der in den folgenden Übertragungszyklus einzubeziehen ist - aufgenommen. Zur Vermeidung von Kollisionen im Falle mehrerer bisher unbekannter und eine Aufnahme in den Kreis der aktiven Teilnehmer anstrebenden Teilnehmer ist jede Teilnehmereinrichtung mit einem spezifischen Verzögerungsmechanismus ausgestattet, welcher die Sendebotschaften - gegenüber anderen Teilnehmereinrichtungen - mit unterschiedlichen spezifischen Verzögerungszeiten absendet. Somit wird sichergestellt, daß diejenige Teilnehmereinrichtung im Laufe eines Übertragungszyklus neu aufgenommen wird, welche vor einer anderen ebenfalls noch nicht aufgenommenen Teilnehmereinrichtung ihre Sendebotschaft absendet. Auf diese Art und Weise werden sukzessive in aufeinander folgenden Übertragungszyklen einzelne neue Teilnehmereinrichtungen in der sich aufgrund ihrer zugeordneten Verzögerungszeit ergebenden Reihenfolge in den Kreis der aktiven Teilnehmer aufgenommen.

Die einzelnen Teilnehmereinrichtungen sind über das gleiche Übertragungsmedium (z.B. Funkverbindung, Infrarotverbindung) miteinander gekoppelt. Im Falle der Funkverbindung der einzelnen Teilnehmereinrichtungen erfolgt eine Sendung bzw. ein Empfang der elektromagnetischen Wellen aller Teilnehmereinrichtungen auf einer identischen Frequenz.

Eine besonders vorteilhafte Verwendung der erfindungsgemäßen Teilnehmereinrichtung besteht in der Verwendung der Teilnehmereinrichtung zur automatischen sensorgesteuerten Informationsübermittlung. Während im Normalfall die Sendebotschaften von den Benutzern der Teilnehmereinrichtungen in die Teilnehmereinrichtung eingesprochen werden, wird eine derartige automatische Informationsübermittlung beispielsweise durch einen Sensor (z.B. Unfallsensor, Crash-Sensor) ausgelöst, woraufhin die jeweilige Teilnehmereinrichtung eine Botschaft an alle anderen Teilnehmereinrichtungen absendet und diese beispielsweise vor einem Unfall warnt oder eine beliebige andere - vorher festgelegte - Botschaft übermittelt. Damit eignet sich die erfindungsgemäße Teilnehmereinrichtung auch zur Durchführung von Überwachungs- und Kontrollarbeiten. Bei plötzlich auftretenden Zustandsänderungen, welche zur Auslösung eines Sensors führen, wird dann die jeweilige sensorbezogene festgelegte Informationsbotschaft (z.B. Achtung Unfall!, Achtung Überschwemmung!, Achtung Feuer! usw.) an die übrigen Teilnehmereinrichtungen weitergegeben.

Derartige automatisch ausgestauschte Botschaften können zur Information, Warnung, Routineabfrage, etc. der anderen Teilnehmereinrichtungen dienen.

Die erfindungsgemäße Teilnehmereinrichtung, mit welcher ein in der bisher beschriebenen Art und Weise betriebenes digitales Kommunikationsnetz aufgebaut werden kann, besteht aus einem zentralen Steuerungsprozessor, welcher die Koordination eines E/A-Prozessors (Eingabe-/Ausgabeprozessors), eines Protokollprozessors, eines Signalverarbeitungsprozessors, eines Zeitscheibenprozessors sowie einer Übertragungseinrichtung vornimmt. Die Erfindung ist anhand eines Ausführungsbeispiels näher erläutert. Es zeigen:
- Fig. 1: die erfindungsgemäße Teilnehmereinrichtung als Gesamtblockschaltbild,
- Fig. 2: der Aufbau eines E/A-Prozessors nach Fig. 1,
- Fig. 3: der Aufbau eines Protokollprozessors nach Fig. 1,
- Fig. 4: der Aufbau eines Signalverarbeitungsprozessors nach Fig. 1,
- Fig. 5: der Aufbau eines Zeitscheibenprozessors nach Fig. 1,
- Fig. 6: der Aufbau einer ersten Ausführungsform einer Übertragungseinrichtung nach Fig. 1,
- Fig. 7: der Aufbau einer zweiten Ausführungsform einer Übertragungseinrichtung nach Fig. 1,
- Fig. 8: der Aufbau einer dritten Ausführungsform einer Übertragungseinrichtung nach Fig. 1,
- Fig. 9: der Aufbau einer vierten Ausführungsform einer Übertragungseinrichtung nach Fig. 1,
- Fig. 10: der Aufbau einer fünften Ausführungsform einer Übertragungseinrichtung nach Fig. 1 sowie
- Fig. 11: der Aufbau einer sechsten Ausführungsform einer Übertragungseinrichtung nach Fig. 1

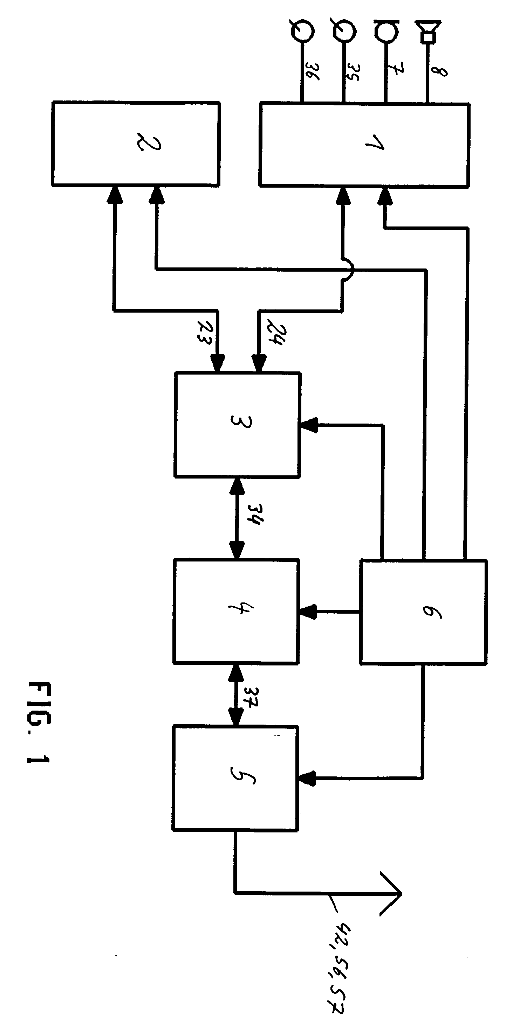

Aus Fig. 1 ist das Zusammenwirken der einzelnen Blockelemente der erfindungsgemäßen Teilnehmereinrichtung dargestellt. Zunächst ist ein Steuerungsprozessor 6 ersichtlich, welcher mit einem E/A-Prozessor 1, einem Protokollprozessor 2, einem Signalverarbeitungsprozessor 3, einem Zeitscheibenprozessor 4 und einer Übertragungseinrichtung 5 steuernd in Verbindung steht. Desweiteren ist der E/A-Prozessor 1 abgebildet, welcher einen Mikrofoneingang 7, einen Lautsprecherausgang 8, einen CD-Eingang 35 sowie einen AUX-Eingang 36 aufweist. Ebenfalls denkbare Modem-Eingänge sowie sonstige Datenübertragungseingänge sind nicht abgebildet.

Außerdem ist aus Fig. 1 noch die mit der Übertragungseinrichtung 5 verbundene Antenne 42 ersichtlich, welche zum Senden bzw. Empfangen von elektromagnetischen Wellen im Falle der Funkverbindung mit anderen Teilnehmereinrichtungen dient. Falls die Teilnehmereinrichtungen über Infrarotsignale in Verbindung stehen, werden Infrarotempfangselemente 56 bzw. -sendeelemente 57 eingesetzt.

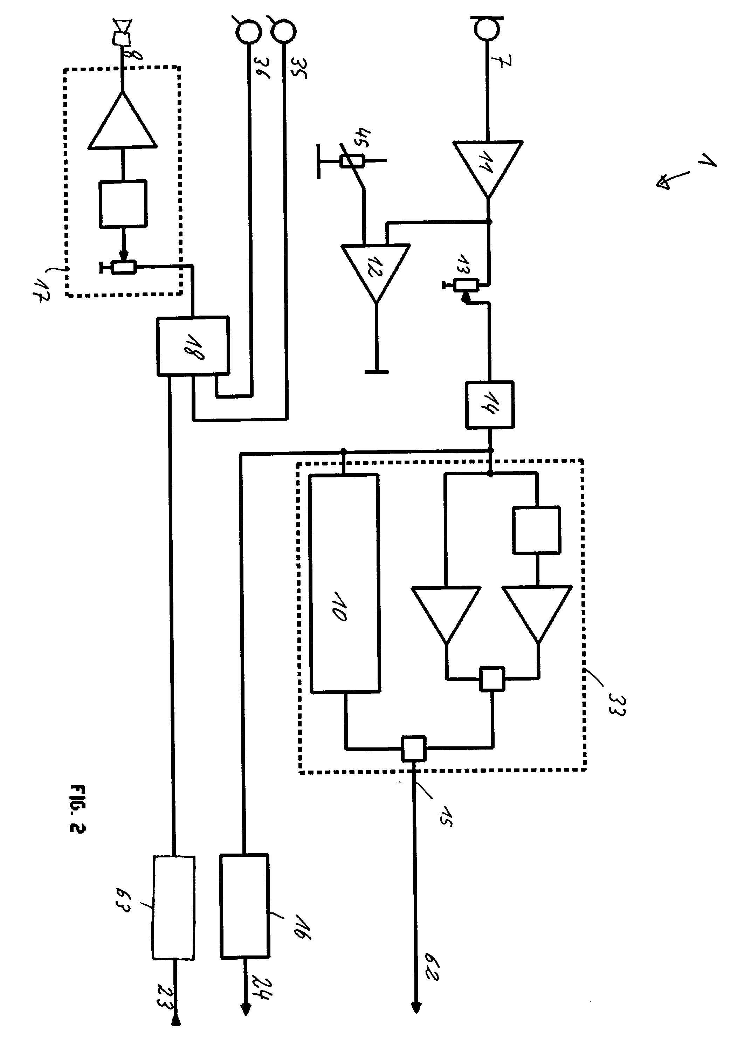

Das Schaltbild nach Fig. 2 zeigt einen Einblick in den E/A-Prozessor 1. Der Mikrofoneingang 7 ist mit dem Eingangsverstärker 11 verbunden, an dessen Ausgang ein Komparator 12 mit einem Stellelement 45 liegt. Eingangsverstärker 11 und Komparator 12 dienen zur Erkennung des Vorhandenseins einer Sprechgarnitur. Der Ausgang des Eingangsverstärkers 11 ist desweiteren mit dem Lautstärkesteller 13 und dem darauf folgenden Antialiasfilter 14 verbunden. Der Antialiasfilter 14 weist einen Bandpaß zur Unterdrückung unerwünschter Nebengeräusche auf und ist mit Elementen zur Pegelmessung 33 verbunden, welche wiederum einen Zusatzbandpaß zur besonderen Spracherkennung enthalten. Außerdem ist der Antialiasfilter 14 mit einem zu den Elementen zur Pegelmessung 33 zugehörigen Signalerkennungselement 10 verbunden, welches eine Differenzierung zwischen Nutz- und Störsig-nalen (z.B. Umgebungsgeräuschen) unter Vergleich von Spannungsgradienten vornimmt. Ein VOX-Signal 15 schaltet die Elemente zur Pegelmessung 33 sowie den Antialiasfilter 14 über die Verbindung 62 zum Steuerungsprozessor durch. Der Antialiasfilter 14 und das Signalerkennungselement 10 sind über den A/D-Wandler 16 über die Verbindung 24 mit dem Signalverarbeitungsprozessor 3 verbunden.

Der E/A-Prozessor 1 nach Fig. 2 weist desweiteren eine Verbindung 23 zum Signalverarbeitungsprozessor 3 auf, welche über einen D/A-Wandler 63 in eine Mischstufe 18 mündet, an welcher auch der CD-Eingang 35 sowie der AUX-Eingang 36 des E/A-Prozessors 1 angeschlossen sind.

Am Ausgang der Mischstufe 18 liegt eine Lautsprecherendstufe 17 mit einem Lautsprecherausgang 8, welche eine Klangregelung, individuelle Lautstärkeneinstellung sowie eine Lautstärkeneinstellung in Abhängigkeit von der Umgebungslautstärke ermöglicht.

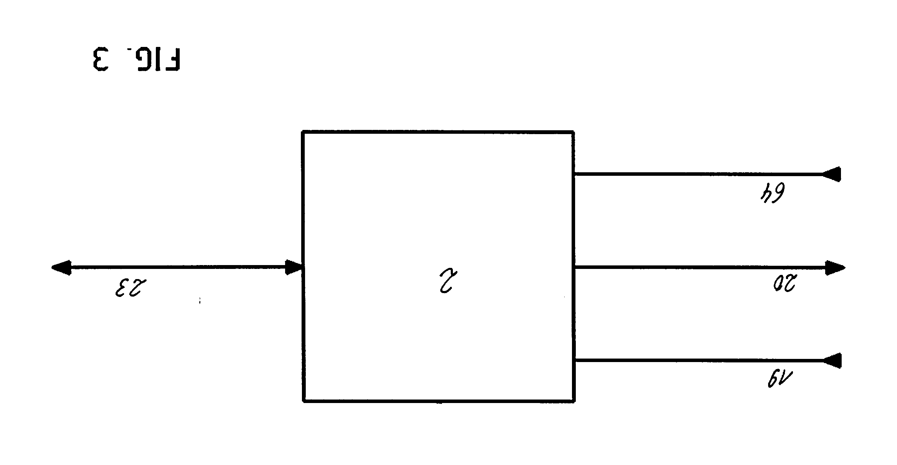

Fig. 3 zeigt den Protokollprozessor 2, welcher eine Verbindung 23 zum Signalverarbeitungsprozessor 3 aufweist und desweiteren einen Eingang 19 sowie einen Ausgang 20 für serielle Daten. Der Protokollprozessor 2 kann desweiteren einen oder mehrere Sensoreingänge 64 aufweisen, über welche die in Patentanspruch 30 beschriebene automatische Verschickung von Sendebotschaften stattfinden kann. An einen derartigen Sensoreingang 64 können verschiedenste Sensoren angeschlossen werden (Crash-Sensoren, Temperatursensoren, Wasserstandssensoren, Drucksensoren etc.), so daß die erfindungsgemäße Teilnehmereinrichtung auch zur Kontrolle und Überwachung von Sensorgrößen und damit verbundenen Apparaten verwendet werden kann.

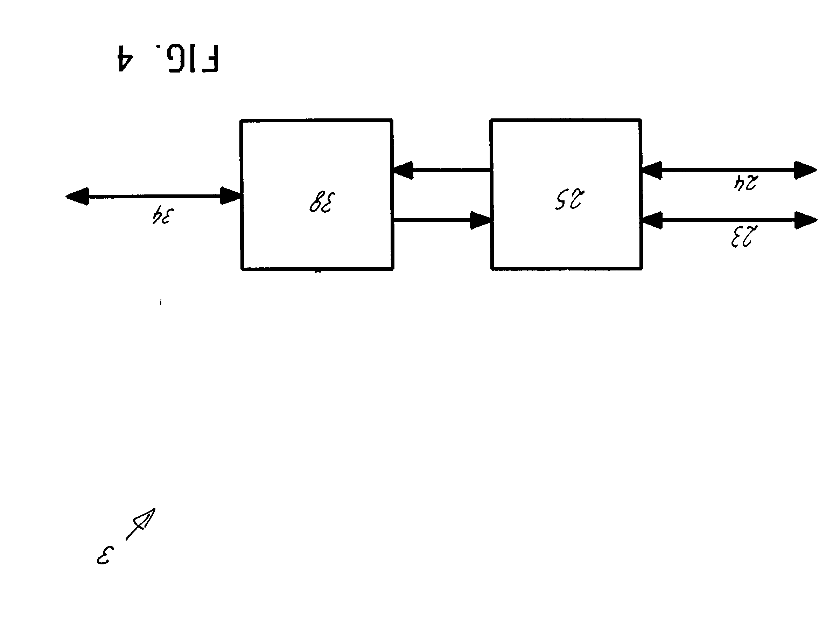

Fig. 4 zeigt den Signalverarbeitungsprozessor 3 nach Fig. 1 mit Verbindungen 23, 24 zum bzw. vom E/A-Prozessor 1 und Protokollprozessor 2. Der Komprimierungsprozessor 25 dient zur Komprimierung bzw. Dekomprimierung von Daten zum Zwecke der Datenreduktion bzw. Datenexpansion. An den Komprimierungsprozessor 25 ist das Prüfelement 38 zur Datenabsicherung (beispielsweise durch Bildung von Prüfsummen) angeschlossen. Das Prüfelement 38 steht über die Verbindung 34 mit dem Zeitscheibenprozessor 4 nach Fig. 1 in Verbindung.

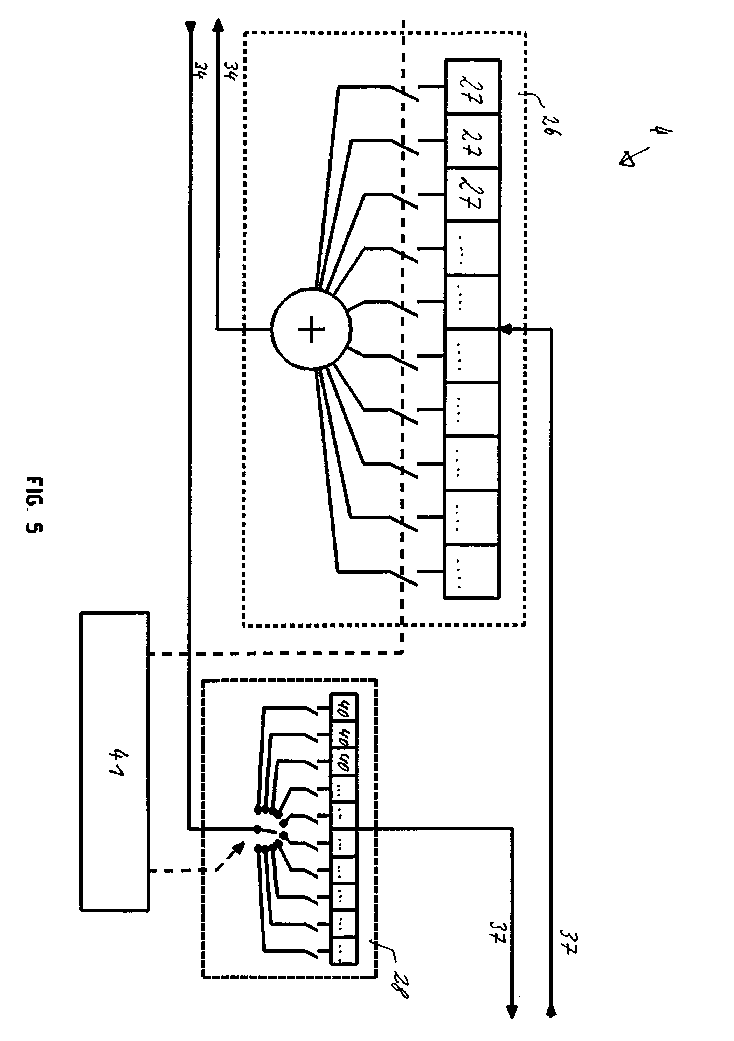

Fig. 5 zeigt den Aufbau eines Zeitscheibenprozessors 4 nach Fig. 1. Zum einen empfängt der Zeitscheibenprozessor 4 über eine Verbindung 37 von der Übertragungseinrichtung 5 Signale für die Auswahleinrichtung 26, welche Empfangszeitscheiben 27 enthält, die mit den Kennungen der anderen Teilnehmereinrichtungen belegt sind. Im Rahmen eines Übertragungszyklus werden nun sukzessive die einzelnen Empfangszeitscheiben 27 abgefragt und die eventuell eingetroffenen Botschaften von anderen Teilnehmereinrichtungen über die Verbindung 34 zum Sig-nalverarbeitungsprozessor 3 weitergeleitet. In anderer Richtung empfängt der Zeitscheibenprozessor 4 über die Verbindung 34 vom Signalverarbeitungsprozessor 3 Daten für die Auswahleinrichtung 28, welche einzelne Sendezeitscheiben 40 enthält, die jeweils mit der Kennung der anderen bekannten Teilnehmereinrichtungen versehen sind. Im Rahmen eines Übertragungszyklus erfolgt dann eine Versendung der Daten über die Verbindung 37 zur Übertragungseinrichtung 5 unter Verlassen der Auswahleinrichtung 28. Die Auswahleinrichtung 26 sowie die Auswahleinrichtung 28 werden über ein mit dem Steuerungsprozessor verbundenes Verwaltungselement 41 im Rahmen eines jeden Übertragungszyklus koordinierend gesteuert. Das Verwaltungselement 41 kann beispielsweise auch mit einer neuen Kennung auftretende Signale einer neuen Teilnehmereinrichtung erkennen und beispielsweise eine neue Empfangszeitscheibe 27 bzw. Sendezeitscheibe 40 einrichten oder in umgekehrtem Fall löschen. Außerdem kann über das Verwaltungselement 41 eine Codeabfrage zum Ausfiltern bestimmter Teilnehmer über die PIN-Nummer erfolgen.

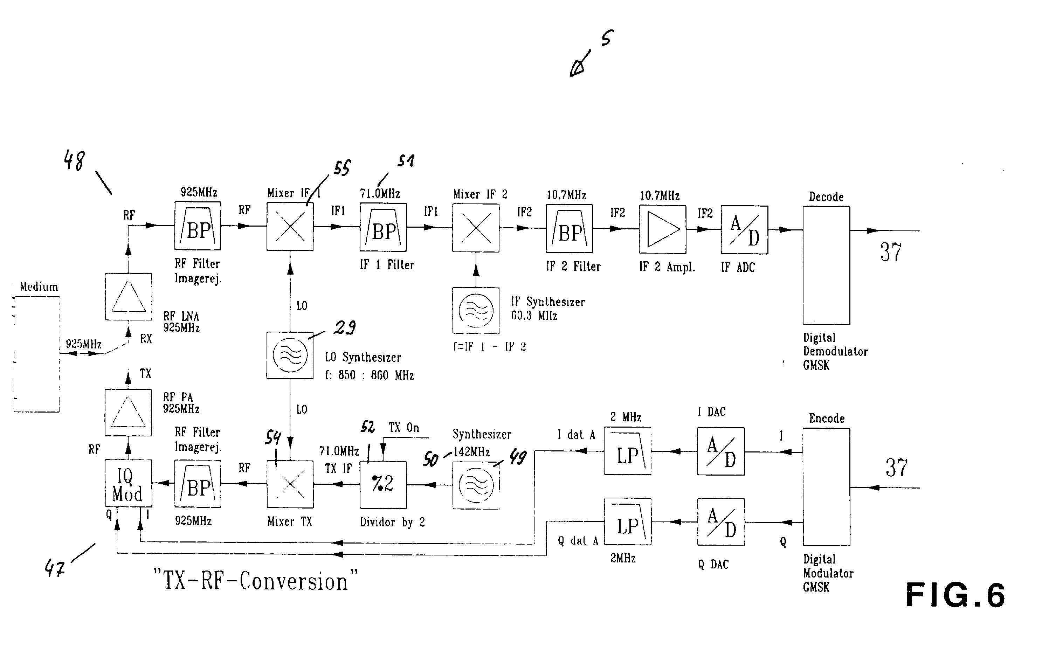

Fig. 6 zeigt eine erste Ausführungsform der Übertragungseinrichtung 5 nach Fig. 1 mit Verbindungen 37 zum Zeitscheibenprozessor 4. Die Übertragungseinrichtung 5 nach Fig. 6 ist in Hochfrequenztechnik ausgeführt und weist einen Zentralsynthesizer 29 auf, welcher über Mischer 54 und 55 mit dem Sendezweig 47 sowie dem Empfangszweig 48 verbunden ist. Der Sendezweig 47 weist einen weiteren Synthesizer 49 auf, dessen Zwischensendefrequenz 50 ein Vielfaches, insbesondere das Doppelte (bzw. die Hälfte, ein Drittel, ein Viertel, nicht abgebildet) der Zwischenempfangsfrequenz 51 des Empfangszweigs 48 beträgt. Der weitere Synthesizer 49 ist mit einem zu-/abschaltbaren Teiler 52 (bzw. Vervielfacher mit Filterelementen, nicht abgebildet) verbunden. Zur Abgrenzung gegenüber anderen Gruppen miteinander in Kontakt stehender Teilnehmereinrichtungen ist die mit der Zwischenempfangsfrequenz 51 identischen Zwischensendefrequenz 50 auswählbar. Die weiteren Bauelemente sind der Beschriftung nach Fig. 6 zu entnehmen. Der weitere Synthesizer 49 ist je nach Bedarf über den Teiler 52 zu- und abschaltbar, so daß sichergestellt ist, daß beispielsweise beim Empfang auf der Empfangsfrequenz die ansonsten störende Sendefrequenz nicht ins Gewicht fällt, die Frequenz des weiteren Synthesizers 49 genau ein Vielfaches, im vorliegenden Fall das Doppelte, nämlich 142 MHz statt 71 MHz der Empfangsfrequenz 51, beträgt. Der weitere Synthesizer 49 kann ohne Störung des Empfangsvorgangs schwingen und muß nicht unter Inkaufnahme unerwünschter Einschwingprozesse immer wieder angeschaltet werden.

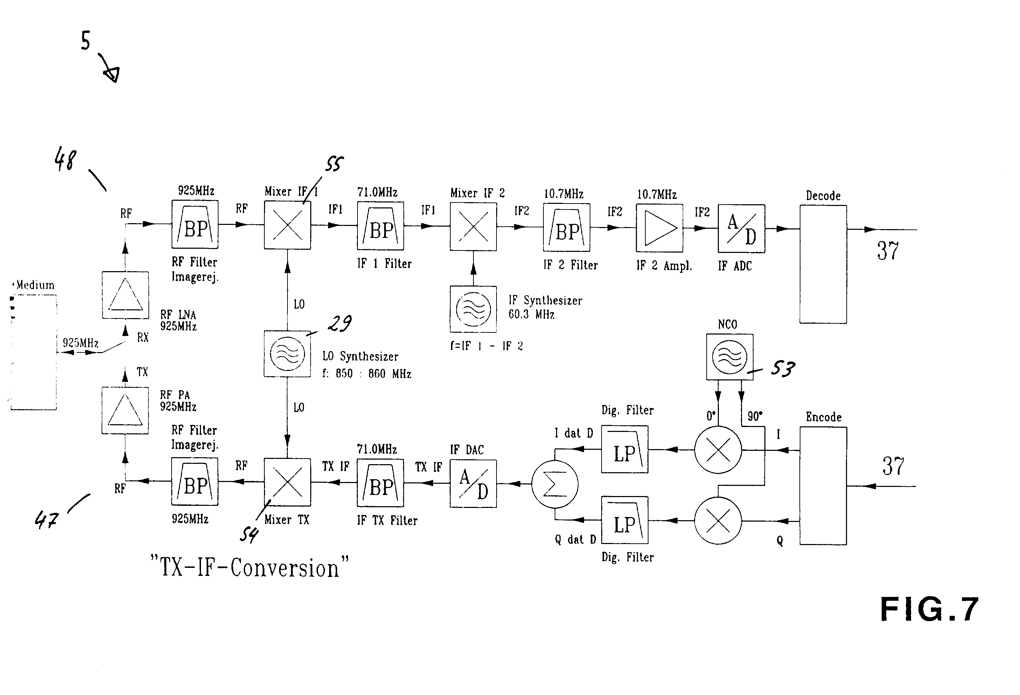

Fig. 7 zeigt eine zweite Ausführungsform der Übertragungseinrichtung 5 nach Fig. 1 ebenfalls in Hochfrequenztechnik mit Verbindungen 37 zum Zeitscheibenprozessor 4. Auch hier liegen eine Sendezweig 47 und ein Empfangszweig 48 vor, welche ebenfalls über einen Zentralsynthesizer 29, der über Mischer 54 und 55 eingespeist wird, bedient werden. Im Sendezweig 47 ist ein NCO 53 (numercially-controlled-oscillator) vorgesehen, welcher vom Zeitscheibenprozessor 4 kommende Signale - nach Aufteilung in ein I-und Q-Anteil - mit einem Oszillationssignal vermischt. Der NCO 53 kann verzögerungs- frei zu- und abgeschaltet werden, so daß während eines Empfangsvorgangs im Empfangszweig 48 vollkommene Störungsfreiheit aufgrund des abgeschalteten NCO 53 herrscht. Die weiteren Aufgaben der Bauelemente sind der Figurenbeschriftung nach Fig. 7 zu entnehmen.

Fig. 6 und 7 zeigen also zwei in Hochfrequenztechnik ausgeführte Übertragungseinrichtungen 5, bei welchen durch die beschriebenen Vorkehrungen eine gegenseitige Störung der Sende- und Empfangsvorgänge vermieden wird. Die Übertragungseinrichtung 5 nach Fig. 6 und 7 arbeiten über Funksignale und benutzen eine Antenne 42 als Sende- bzw. Empfangsmedium.

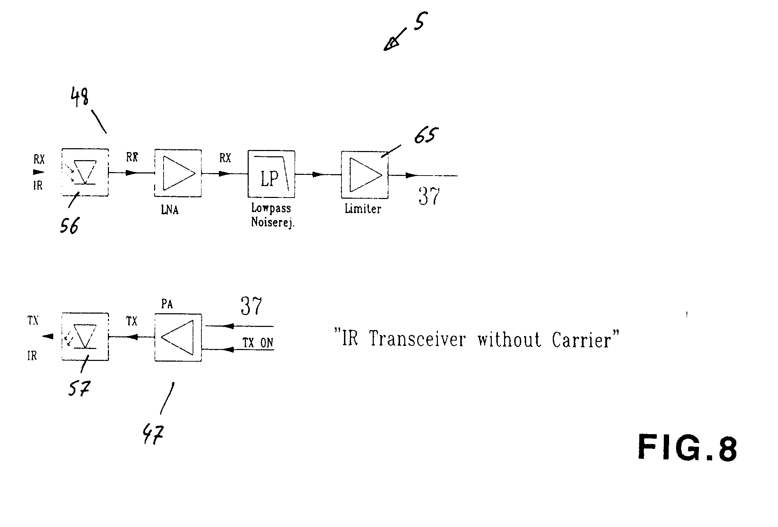

Die Fig. 8 zeigt eine in Infrarottechnik ausgeführte Übertragunsgeinrichtung 5, welche ohne Trägerfrequenztechnik arbeitet. Auch hier ist ein Empfangszweig 48 mit einem Infrarotempfangselement 56 sowie ein Sendezweig 47 mit einem Infrarotsendeelement 57 vorgesehen. Außerdem bestehen Verbindungen 37 zum Zeitscheibenprozessor 4. Desweiteren weist die Übertragungseinrichtung 5 nach Fig. 8 die im Schaltbild bezeichneten Bauelemente auf und enthält ferner im Empfangszweig 48 ein Wandlungselement 65 (beispielsweise einen Schmitt-Trigger), womit sinusförmige Signale in Rechtecksignale gewandelt werden.

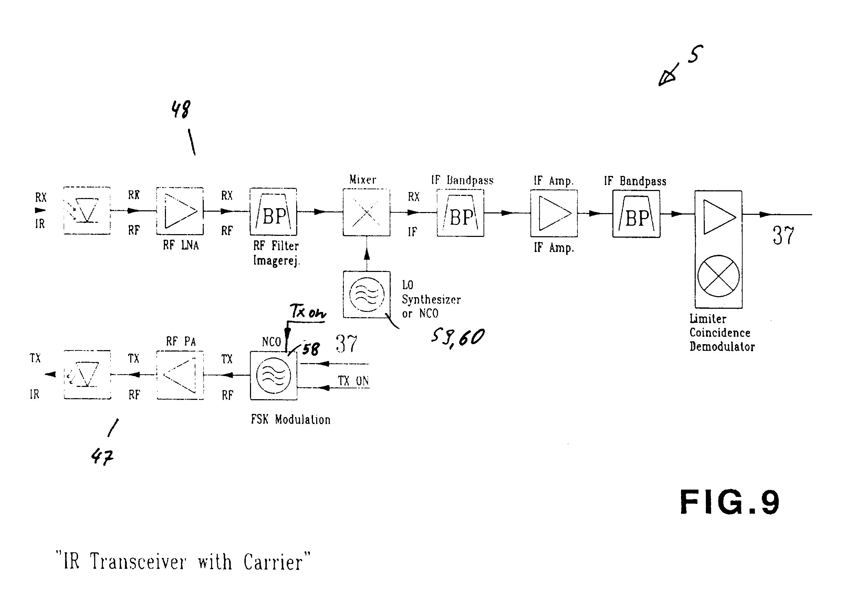

Fig. 9 zeigt eine weitere Ausführungsform einer Übertragungseinrichtung 5 in Infarrottechnik unter Zuhilfenahme der Trägerfrequenztechnik. Auch hier liegen ein Sendezweig 47 und ein Empfangszweig 48 sowie Verbindungen 37 zum Zeitscheibenprozessor 4 vor. Zur Erzeugung der Sende- bzw. Empfangsfrequenz wird jeweils entweder ein NCO 58 oder 60 oder ein Synthesizer 59 verwendet.

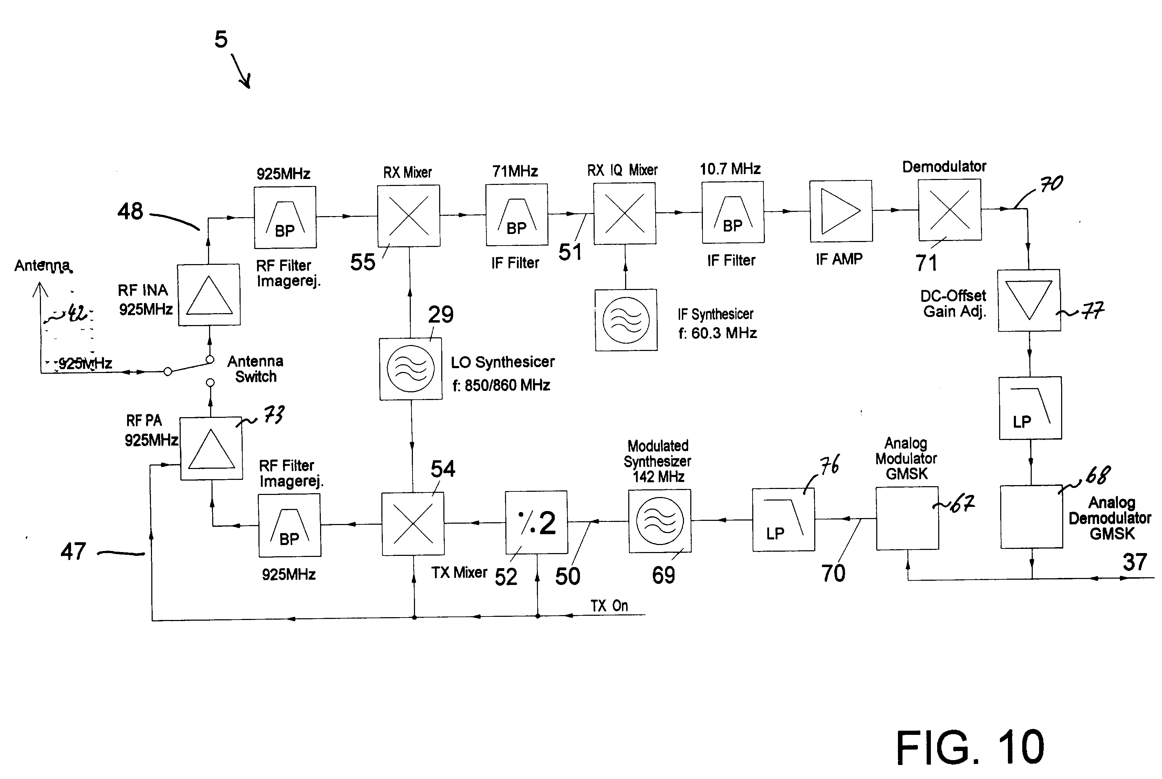

Aus Fig. 10 geht eine Übertragungseinrichtung 5 mit analogen GMSK -Modulatoren 67 bzw. GMSK -Demodulatoren 68 hervor.

Der analoge GMSK - Modulator 67 erzeugt durch Filterung das ,,eye-pattern" -Signal 70, welches den Tiefpaß 76 zur Störsignalunterdrückung und sodann einen frequenz - oder phasenmodulierbaren Synthesizer 69 durchläuft.

Letzterer kann ein Vielfaches bzw. einen Bruchteil der zwischen Empfangsfrequenz 51 aufweisen und durch einen entsprechenden Teiler 52 bzw. Vervielfacher (nicht abgebildet) mit dem Mischer 54 in Verbindung stehen (vgl. auch Fig. 6).

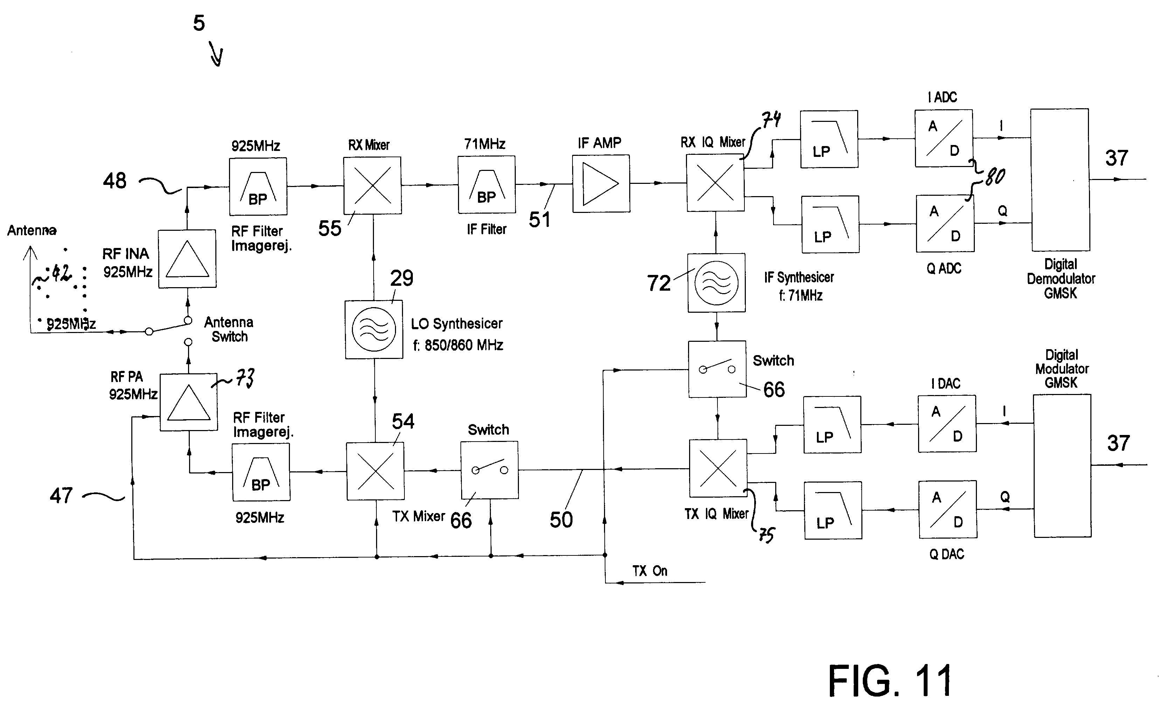

Bei einwandfreier Isolation des modulierbaren Synthesizers 69 gegenüber dem Empfangszweig 48 und dem Mischer 54 kann der modulierbare Synthesizer 69 auch eine Zwischensendefrequenz 50 aufweisen, welche der Zwischenempfangsfrequenz 51 entspricht. Allerdings wären dann in Analogie zu der im folgenden beschriebenen Fig. 11 entsprechende Schalter 66 einzufügen sowie ein- /ausschaltbare Mischer 54 und eine ein- und ausschaltbare Endstufe 73 zu verwenden (nicht abgebildet).

Im Empfangszweig 48 erfolgt durch den Demodulator 71 (vorzugsweise als Koinzidenz-Demodulator ausgebildet), eine Rückgewinnung des ,,eye-pattern" -Signals 70 welches die Verstärkungs- /Anpassungsstufe 77 (mit offset-Anpassung), sowie einen störungssignalunterdrückenden Tiefpaß 78 durchläuft und daraufhin in den analogen GMSK - Demodulator 68 eintritt.

Die analoge Übertragungseinrichtung 5 nach Fig. 10 weist verglichen mit einem digitalen System einen erheblich geringeren Stromverbrauch auf.

Der Sendezweig 47 kann im ,,C-Betrieb" mit hohem Wirkungsgrad und nur geringen Anforderungen an die Verzerrungsfreiheit von Mischer 54 und Endstufe 73 betrieben werden.

Fig. 11 zeigt eine Übertragungseinrichtung 5 mit einem Synthesizer 72, der sowohl mit dem Empfangszweig 48 wie auch mit dem Sendezweig 47 in Verbindung treten kann.

Beim Sendebetrieb sind die Schalter 66 geschlossen, der schaltbar ausgeführte Mischer 54 und die Endstufe 73 aktiviert.

Zur Vermeidung von Störungen werden beim Empfangsbetrieb die Schalter 66 geöffnet und der Mischer 54 sowie die Endstufe 73 abschaltet.

Falls der Synthesizer 72 mit niedrigen Frequenzen betrieben wird (z. B. den vorliegenden 71 Mhz) kann der Synthesizer 72 noch gegenüber dem Empfangszweig 48 und dem Mischer 54 isoliert werden, wobei zusätzlich die Schalter 66 sowie ein schaltbarer Mischer 54 und eine schaltbare Endstufe 73 eingesetzt werden.

Sowohl im Sendezweig 47 wie auch im Empfangszweig 48 finden eine analoge Quadratur-Modulation bzw. -Demodulation statt, und zwar direkt im Mischer 75 bzw. im Mischer 74.

Im Vergleich zur Übertragungseinrichtung 5 nach Fig. 7 wird in Fig. 11 kein NCO 53 verwendet und es ist im Empfangszweig 48 keine Herabsetzung der Zwischensendefrequenz 51 (wie in Fig. 7 von 71 Mhz auf 10,7 Mhz) notwendig.

Außerdem können AD-Wandler 80 mit geringer Abtastrate und mit geringem Stromverbrauch verwendet werden.

Zur beispielhaften Verdeutlichung des in den Ansprüchen 31 - 33 vorgestellten erfindungsgemäßen Verfahrens zum Aufbau und Betrieb eines digitalen Kommunikationsnetzes sei zunächst von einem Kommunikationsnetz mit vier aktiv im Netz angemeldeten und einander bekannten Teilnehmereinrichtungen ausgegangen. Diese einzelnen Teilnehmereinrichtungen tauschen nun im Rahmen der aufeinanderfolgenden Übertragungszyklen Botschaften aus. Beim Beginn eines Übertragungszyklus beginnt die Teilnehmereinrichtung mit der niedrigsten Kennung zu senden und alle anderen Teilnehmereinrichtungen empfangen die Botschaft. Daraufhin schaltet die Teilnehmereinrichtung mit der niedrigsten Kennung auf Empfang um und die Teilnehmereinrichtung mit der zweitniedrigsten Kennung beginnt an alle anderen Teilnehmereinrichtungen zu senden. Nachdem alle vier Teilnehmereinrichtungen gesendet haben, besteht eine Pause im noch laufenden Übertragungszyklus, in welcher sich eine neue, bisher nicht mit einer Kennung versehene Teilnehmereinrichtung in den Teilnehmerkreis einschalten kann. Falls dies geschieht, wird die Botschaft dieser neuen Teilnehmereinrichtung von allen übrigen bisher schon miteinander bekannten Teilnehmereinrichtungen empfangen und die neue Teilnehmereinrichtung wird unter Zuweisung einer Kennung in den Teilnehmerkreis aufgenommen.

Im Rahmen eines jeden Übertragungszyklus wird vorteilhafterweise höchstens eine neue Teilnehmereinrichtung aufgenommen werden. Falls mehrere Teilnehmereinrichtungen aufgenommen werden sollen, setzt sich diejenige Teilnehmereinrichtung durch, welche aufgrund der teilnehmereinrichtungsspezifischen Verzögerungszeit vor den anderen Teilnehmereinrichtungen sendet.

Nach Ablauf mehrerer Übertragungszyklen, im Verlauf derer jeweils maximal eine neue Teilnehmereinrichtung aufgenommen wird, werden die einzelnen in Rangfolge ihrer Verzögerungszeiten gestaffelten Teilnehmereinrichtungen sukzessive in den aktiven Teilnehmerkreis aufgenommen.

### BEZUGSZEICHEN

- 1: E/A-Prozessor
- 2: Protokollprozessor
- 3: Signalverarbeitungsprozessor
- 4: Zeitscheibenprozessor
- 5: Übertragungseinrichtung
- 6: Steuerungsprozessor
- 7: Mikrofoneingang
- 8: Lautsprecherausgang
- 9: Filterelement
- 10: Signalerkennungselement
- 11: Eingangsverstärker
- 12: Komperator
- 13: Lautstärkesteller
- 14: Antialiasfilter
- 15: VOX-Signal
- 16: A/D-Wandler
- 17: Lautsprecherendstufe
- 18: Mischstufe
- 19: Eingang für serielle Daten
- 20: Ausgang für serielle Daten

- 23: Verbindung Protokollprozessor - Signalverarbeitungsprozessor
- 24: Verbindung Signalverarbeitungsprozessor - E/A-Prozessor
- 25: Komprimierungsprozessor
- 26: Auswahleinrichtung
- 27: Empfangszeitscheibe
- 28: Auswahleinrichtung
- 29: Zentralsynthesizer
- 30: Sendemodulator
- 31: Empfangsdemodulator
- 32: Sendeendstufe
- 33: Element zur Regelmessung
- 34: Verbindung Signalverarbeitungsprozessor - Zeitscheibenprozessor
- 35: CD-Eingang
- 36: AUX-Eingang
- 37: Verbindung Zeitscheibenprozessor - Übertragungseinrichtung
- 38: Prüfelement

- 40: Sendezeitscheibe
- 41: Verwaltungselement
- 42: Antenne
- 43: Umschalteinrichtung
- 44: Empfangselement
- 45: Stellelement
- 46: Speichereinheit
- 47: Sendezweig
- 48: Empfangszweig
- 49: Synthesizer
- 50: Zwischensendefrequenz
- 51: Zwischenempfangsfrequenz
- 52: Teiler
- 53: NCO
- 54: Mischer
- 55: Mischer
- 56: Infrarotempfangselement
- 57: Infrarotsendeelement
- 58: NCO
- 59: Synthesizer
- 60: NCO
- 61: Mischer
- 62: Verbindung zum Steuerungsprozessor
- 63: D/A-Wandler
- 64: Sensoreingang
- 65: Wandlungselement
- 66: Schalter
- 67: GMSK -Modulator
- 68: GMSK -Demodulator
- 69: modulierbarer Synthesizer
- 70: Eye-pattern-Signal
- 71: Demodulator
- 72: Synthesizer
- 73: Endstufe
- 74: Mischer
- 75: Mischer
- 76: Tiefpaß
- 77: Verstärkungs-/Anpassungsstufe
- 78: Tiefpaß
- 79: Filterstufe
- 80: AD-Wandler

## Patentansprüche

1. Teilnehmereinrichtung zum Aufbau und Betrieb eines digitalen Kommunikationsnetzes mit mehreren gleichartigen Teilnehmereinrichtungen,
**gekennzeichnet durch**
**folgende Merkmale**:
- einen E/A-Prozessor (1) zum Empfang, zur Wiedergabe und zur Vorverarbeitung eines Signals,
- einen E/A-Prozessor (2) zur protokollgerechten Weitergabe von Daten,
- einen mit dem E/A-Prozessor (1) und dem Protokollprozessor (2) in Verbindung stehenden Signalverarbeitungsprozessor (3) zur Komprimierung/Dekomprimierung sowie Prüfung von Daten,
- einen mit dem Signalverarbeitungsprozessor (3) verbundenen Zeitscheibenprozessor (4) zur Herstellung bzw. Beendigung einer Verbindung mit anderen Teilnehmereinrichtungen,
- eine mit dem Zeitscheibenprozessor (4) verbundene Übertragungseinrichtung (5) zur Datenübertragung sowie
- einen mit dem E/A-Prozessor (1), dem Protokollprozessor (2), dem Sig-nalverarbeitungsprozessor (3), dem Zeitscheibenprozessor (4) sowie der
- Übertragungseinrichtung (5) in Verbindung stehenden und diese steuernden Steuerungsprozessor (6).

2. Teilnehmereinrichtung nach Anspruch 1,
**dadurch gekennzeichnet**,
daß der E/A-Prozessor (1) ein Prozessor mit entweder jeweils mindestens einem Mikrofoneingang (7) und/oder einem Lautsprecherausgang (8) und/oder CD-Eingang (35) und/oder AUX-Eingang (36) und/oder Modem-Eingang und/oder sonstigen Datenübertragungseingang ist.

3. Teilnehmereinrichtung nach einem der vorhergehenden Ansprüche,
**dadurch gekennzeichnet**,
daß der E/A-Prozessor (1) Elemente zur Pegelmessung (33) mit Zusatzbandpaß aufweist.

4. Teilnehmereinrichtung nach einem der vorhergehenden Ansprüche,
**dadurch gekennzeichnet**,
daß ein Signalerkennungselement (10) des E/A-Prozessors (1) zur Differenzierung von Nutz- und Störsignalen dient.

5. Teilnehmereinrichtung nach einem der vorhergehenden Ansprüche,
**dadurch gekennzeichnet**,
daß der E/A-Prozessor (1) ein VOX-Signal (15) an den Steuerungsprozessor (6) abgibt.

6. Teilnehmereinrichtung nach einem der vorhergehenden Ansprüche,
**dadurch gekennzeichnet**,
daß der E/A-Prozessor (1) ein Element (16) zur Lautstärkennormierung, Analog/Digital-Wandlung und/oder Datenkompression aufweist.

7. Teilnehmereinrichtung nach einem der vorhergehenden Ansprüche,
**dadurch gekennzeichnet**,
daß der Protokollprozessor (2) einen Eingang (19) für serielle und/oder parallele Daten, einen Ausgang (20) für serielle und/oder parallele Daten sowie mindestens einen zusätzlichen Sensoreingang (64) aufweist.

8. Teilnehmereinrichtung nach einem der vorhergehenden Ansprüche,
**dadurch gekennzeichnet**,
daß der Signalverarbeitungsprozessor (3) eine bidirektionale Verbindung (23) zum Protokollprozessor (2) bzw. eine bidirektionale Verbindung (24) zum E/A-Prozessor (1) aufweist.

9. Teilnehmereinrichtung nach einem der vorhergehenden Ansprüche,
**dadurch gekennzeichnet**,
daß der Signalverarbeitungsprozessor (3) einen Komprimierungsprozessor (25) zur Komprimierung bzw. Dekomprimierung von Daten aufweist.

10. Teilnehmereinrichtung nach einem der vorhergehenden Ansprüche,
**dadurch gekennzeichnet**,
daß der Signalverarbeitungsprozessor (3) ein Prüfelement (38) zur Überprüfung des Datenstroms aufweist.

11. Teilnehmereinrichtung einem der vorhergehenden Ansprüche,
**dadurch gekennzeichnet**,
daß der Zeitscheibenprozessor (4) eine Auswahleinrichtung (26) zur Auswahl einer oder mehrerer Empfangszeitscheiben (27), eine Auswahleinrichtung (28) zur Auswahl einer oder mehrerer Sendezeitscheiben sowie ein Verwaltungselement (41) zur Steuerung der Auswahleinrichtungen (26) bzw. (28) aufweist.

12. Teilnehmereinrichtung nach einem der vorhergehenden Ansprüche,
**dadurch gekennzeichnet**,
daß die Übertragungseinrichtung (5) in Hochfrequenztechnik ausgeführt ist und einen Zentralsynthesizer (29) zur Erzeugung einer auswählbaren Sende-/Empfangsfrequenz aufweist.

13. Teilnehmereinrichtung nach Anspruch 12,
**dadurch gekennzeichnet**,
daß die Sende-/Empfangsfrequenz mit ein und derselben Arbeitsfrequenz erzeugt wird.

14. Teilnehmereinrichtung nach Anspruch 12 und 13,
**dadurch gekennzeichnet**,
daß ein Sendezweig (47) und ein Empfangszweig (48) vorgesehen sind.

15. Teilnehmereinrichtung nach einem der Ansprüche 12 - 14,
**dadurch gekennzeichnet**,
daß der Zentralsynthesizer (29) über Mischer (54, 55) sowohl mit dem Sendezweig (47) als auch mit dem Empfangszweig (48) verbunden ist.

16. Teilnehmereinrichtung nach einem der Ansprüche 12 - 15,
**dadurch gekennzeichnet**,
daß der Sendezweig (47) einen weiteren Synthesizer (49) aufweist, dessen Zwischensendefrequenz (50) ein Vielfaches, insbesondere das Doppelte der Zwischenempfangsfrequenz (51) oder die Hälfte, ein Drittel, ein Viertel der Zwischenempfangsfrequenz des Empfangszweigs (48) beträgt.

17. Teilnehmereinrichtung nach einem der Ansprüche 12 - 16,
**dadurch gekennzeichnet**,
daß der weitere Synthesizer (49) mit einem zu-/und abschaltbaren Teiler (52) bzw. zu-/abschaltbaren Vervielfacher mit Filterelementen zur Erzeugung einer mit der Zwischenempfangsfrequenz (51) identischen Zwischensendefrequenz (50) verbunden ist.

18. Teilnehmereinrichtung nach einem der Ansprüche 12 - 17,
**dadurch gekennzeichnet**,
daß ein weiterer Synthesizer (72) vorgesehen ist, der dem Sendezweig (47) und/oder dem Empfangszweig (48) zuschaltbar bzw. abschaltbar ist.

19. Teilnehmereinrichtung nach Anspruch 18,
**dadurch gekennzeichnet**,
daß der Synthesizer (72) über Schalter (66) und/oder schaltbare Mischer (54) und/oder ein-/ ausschaltbare Endstufen (73) zu- bzw. abschaltbar ist.

20. Teilnehmereinrichtung nach einem der Ansprüche 12 - 17,
**dadurch gekennzeichnet**,
daß ein modulierbarer Synthesizer (69) vorgesehen ist.

21. Teilnehmereinrichtung nach einem der Ansprüche 12 - 17 oder 20,
**dadurch gekennzeichnet**,
daß analoge GMSK -Modulatoren (67) bzw. GMSK -Demodulatoren (68) vorgesehen sind.

22. Teilnehmereinrichtung nach einem der Ansprüche 12 - 15,
**dadurch gekennzeichnet**,
daß der Sendezweig (47) einen zu-/abschaltbaren NCO (53) aufweist.

23. Teilnehmereinrichtung nach Anspruch 22,
**dadurch gekennzeichnet**,
daß der NCO (53) eine mit der Zwischenempfangsfrequenz (51) identische Zwischensendefrequenz (50) erzeugt.

24. Teilnehmereinrichtung nach einem der Ansprüche 1 - 11,
**dadurch gekennzeichnet**,
daß die Übertragungseinrichtung (5) in Infrarottechnik ausgeführt ist.

25. Teilnehmereinrichtung nach Anspruch 24,
**dadurch gekennzeichnet**,
daß die Übertragungseinrichtung (5) ohne Trägerfrequenztechnik ausgeführt ist.

26. Teilnehmereinrichtung nach Anspruch 24 oder 25,
**dadurch gekennzeichnet**,
daß ein Empfangszweig (48) mit einem Infrarotempfangselement (56) sowie ein Sendezweig (47) mit einem Infrarotsendeelement (57) vorgesehen sind.

27. Teilnehmereinrichtung nach Anspruch 24,
**dadurch gekennzeichnet**,
daß die Übertragungseinrichtung (5) mit Trägerfrequenztechnik arbeitet.

28. Teilnehmereinrichtung nach Anspruch 27,
**dadurch gekennzeichnet**,
daß ein Empfangszweig (48) mit einem Infrarotempfangselement (56) sowie ein Sendezweig (47) mit einem Infrarotsendeelement (57) vorgesehen sind.

29. Teilnehmereinrichtung nach Anspruch 28,
**dadurch gekennzeichnet**,
daß der Sendezweig (47) einen zu-/abschaltbaren NCO (58) zur Erzeugung der Sendefrequenz aufweist.

30. Teilnehmereinrichtung nach Anspruch 28 oder 29,
**dadurch gekennzeichnet**,
daß der Empfangszweig (48) einen Synthesizer (59) oder NCO (60) aufweist, welche die Empfangsfrequenz über einen Mischer (61) in den Empfangszweig (48) einspeisen.

31. Verfahren zum Aufbau und Betrieb eines digitalen Kommunikationsnetzes, insbesondere unter Verwendung einer Teilnehmereinrichtung nach einem der Ansprüche 1 - 30,
**dadurch gekennzeichnet**,
daß jede Teilnehmereinrichtung kontinuierlich und sukzessive Daten anderer Teilnehmereinrichtungen im Rahmen von Übertragungszyklen empfängt bzw. an andere Teilnehmereinrichtungen absendet, wobei jede Teilnehmereinrichtung während eines jeden Übertragungszyklus
- von anderen bekannten und mit einer Kennung versehenen Teilnehmereinrichtungen sukzessive eine Empfangsbotschaft empfängt,
- bei Bedarf eine eigene Sendebotschaft absendet sowie
- neuen, bisher unbekannten Teilnehmereinrichtungen ohne Kennung die Abgabe einer Sendebotschaft ermöglicht.

32. Verfahren nach Anspruch 31,
**dadurch gekennzeichnet**,
daß im Rahmen eines jeden Übertragungszyklus eine neue, bisher unbekannte Teilnehmereinrichtung mit einer Kennung versehen wird.

33. Verfahren nach einem der Ansprüche 31 oder 32,
**dadurch gekennzeichnet**,
daß die einzelnen Teilnehmereinrichtungen ihre Sendebotschaften mit unterschiedlichen spezifischen Verzögerungszeiten abgeben.

34. Verwendung der Teilnehmereinrichtung nach einem der Ansprüche 1 - 30, insbesondere unter Einsatz eines Verfahrens nach einem der Ansprüche 31 - 33 zur automatischen sensorgesteuerten Informationsübermittlung,
**dadurch gekennzeichnet**,
daß bei Betätigung mindestens eines Sensors automatisch eine vorformulierte Botschaft und/oder ein Warnsignal an andere Teilnehmereinrichtungen abgesendet wird.
